# EUROPEAN PATENT APPLICATION

(11) **EP 2 322 774 A1**
(43) Date of publication of application: **18.05.2011**
(21) Application number: 10189038.2
(22) Date of filing: 27.10.2010
(51) Int. Cl.: F01N 3/20

(54) **Apparatus for maintaining a urea solution in a liquid state for treatment of diesel exhaust**

(30) Priority: 11.11.2009 US 616321
(71) Applicant: Delphi Technologies, Inc., Troy, MI 48007 (US)
(72) Inventor: Seino, Michael J., Flushing, MI 48433 (US); Hamilton, Daniel B., Grand Blanc, MI 48439 (US); Li, Bob X., Grand Blanc, MI 48439 (US)
(74) Representative: Denton, Michael John

(57) **Abstract**

A system (110) for keeping a reservoir solution of urea in a liquid state at normally sub-freezing temperatures comprising a reservoir tank module (116) having a heater (26) and disposed in a solution storage tank. Solution in the storage tank is heated by passage of heat through the walls of the reservoir tank module (116) which are formed of a hybrid of plastic polymer (142) and metal (140), preferably a urea-resistant stainless steel, such that the thermal conductivity of the walls is sufficient to liquefy frozen solution in the storage tank in a practical time frame at an acceptable net manufacturing cost for the tank module (116).
The hybrid combination may be formed in any of various arrangements such as, but not limited to, a lower portion formed of metal (140) and an upper portion formed of plastic (142), or alternating bands and/or strips of metal and plastic. The optimum thicknesses of metal and plastic may be determined conventionally.

## Description

### TECHNICAL FIELD

The present invention relates to emissions control in compression-ignited and lean burn spark ignition internal combustion engines; more particularly, to systems for injecting urea into the engine exhaust to scavenge nitrogen oxides; and most particularly, to a system for liquefying a storage tank solution of urea at normally sub-freezing urea-solution temperatures.

### BACKGROUND OF THE INVENTION

To scavenge oxides of nitrogen (NOx) from the exhaust of an internal combustion engine, such as for example, a compression-ignited (CI) diesel engine, urea injection systems are commonly in use in the prior art. An aqueous urea solution is injected into the hot exhaust pipe, where urea is hydrolyzed into ammonia ahead of a selective catalytic reduction (SCR) converter. Ammonia reacts with NOx trapped on the catalyst face to form N₂, CO₂, and H₂O, thereby lowering the level of noxious emissions in the exhaust.

A serious problem in the prior art is that at temperatures below about -11°C, the urea solution can freeze. Thus, a thermal heating system and method are required to thaw the solid solution into a liquid solution (or to keep the solution from freezing) to permit a pump to draw solution for delivery into the exhaust pipe.

A typical prior art urea supply system comprises a relatively small reservoir tank module from which liquid urea solution is dispensed into a diesel engine exhaust system, and a larger storage tank in which the tank module is immersed. The tank module contains a resistance heater that can liquefy suitable quantities of solution in a short time, as is required to meet government air pollution standards. Solution in the storage tank is heated by transfer of heat through the walls of the heated tank module. It is an important operating requirement that the storage tank be able to resupply the tank module within a short time after starting of the engine.

In prior art systems when the solution in the storage tank is frozen, meeting this requirement can be difficult because of limited heat flow through walls of the tank module, which typically is formed of a plastic polymer having relatively low thermal conductivity. It is known to have substituted an all-metal tank module, which has satisfactory thermal conductivity, but the corrosive nature of a urea solution dictates forming the tank module of urea-resistant stainless steel, making this approach cost-prohibitive.

What is needed in the art is an improved reservoir tank module having thermal conductivity sufficient to liquefy frozen urea solution in a practical time frame and having an acceptable net manufacturing cost.

It is a principal object of the present invention to provide a reliable flow of liquid urea solution at ambient temperatures below the freezing point of the solution at an acceptable net manufacturing cost of a urea supply system.

### SUMMARY OF THE INVENTION

Briefly described, a system for keeping a reservoir solution of urea in a liquid state at normally sub-freezing temperatures comprises a reservoir tank module disposed in a storage tank. The reservoir tank module preferably includes a level sensing apparatus, inlet and outlet ports for supplying and withdrawing urea solution, and at least one heating element. The walls of the reservoir tank module are preferably immersed in urea solution contained in the storage tank, which solution is heated by passage of heat through the walls of the reservoir tank module.

In accordance with the present invention, the walls of the reservoir tank module are formed of a hybrid of plastic polymer and metal, preferably a urea-resistant stainless steel, such that the thermal conductivity of the walls is sufficient to liquefy frozen urea solution in the storage tank in a practical time frame and at an acceptable net manufacturing cost for the reservoir tank module.

The hybrid combination may be formed in any of various arrangements such as, but not limited to, a lower portion formed of metal and an upper portion formed of plastic; and a pattern of alternating bands and/or strips of metal and plastic. The metal may be exposed to solution within the reservoir tank module and/or the storage tank; or the metal may be shielded by plastic at either or both locations. The reservoir tank module may be formed by any convenient forming process such as, but not limited to, forming of the metal components as by stamping from sheet stock of powdered metal casting followed by joining or overmolding of the plastic components onto the metal components. For any given application, dependent in part upon the expected climatic extremes during use and the costs of materials, the optimum thermal transfer areas and thicknesses of metal and plastic may be determined conventionally as by computer modeling and/or simple experimentation.

### BRIEF DESCRIPTION OF THE DRAWINGS

The present invention will now be described, by way of example, with reference to the accompanying drawings, in which:
FIG. 1 is an elevational schematic view of a prior art system for keeping a reservoir solution of urea in a liquid state at normally sub-freezing temperatures;
FIG. 2 is an elevational view of a first embodiment of a hybrid reservoir tank module in accordance with the present invention showing metal and plastic portions of the hybrid tank;
FIG. 3 is an enlarged cross-sectional view of a preferred arrangement for joining the metal and plastic portions shown in FIG. 2;
FIG. 4 is an elevational view of a second embodiment of a hybrid reservoir tank module; and
FIG. 5 is an elevational view of a third embodiment of a hybrid reservoir tank module.

The exemplifications set out herein illustrate currently-preferred embodiments of the present invention, and such exemplifications are not to be construed as limiting the scope of the invention in any manner.

### DESCRIPTION OF THE PREFERRED EMBODIMENTS

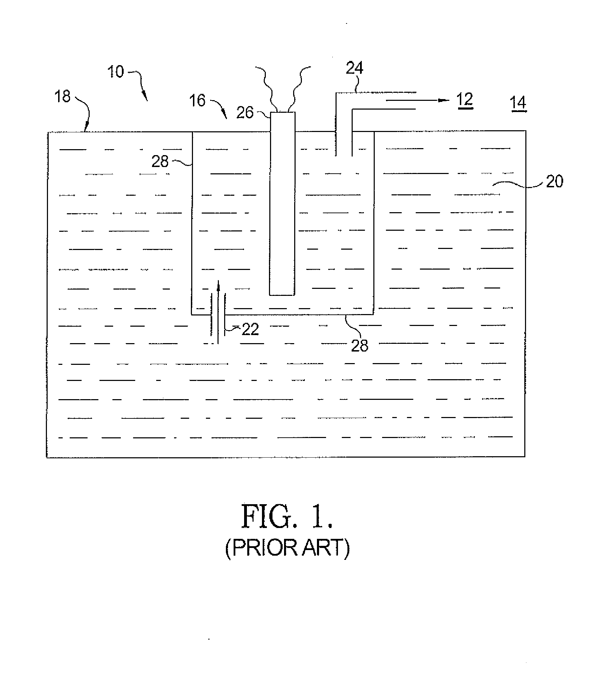

Referring to FIG. 1, a portion of an exemplary prior art system 10 for supplying a solution of urea to an exhaust emissions control system 12 such as, for example, a compression-ignited diesel engine or a lean burn spark ignition engine 14 comprises a reservoir tank module 16 disposed within a storage tank 18 for urea solution 20. Solution 20 enters tank module 16 via an inlet 22 and is dispensed via an outlet 24. A heater 26 is disposed within tank module 16 for liquefying solution 20 within module 16. Excess heat from heater 26 is intended to pass through the walls 28 of tank module 16 and locally liquefy solution 20 in proximity to tank module 16 and inlet 22 to allow gravitational replenishment of solution into tank module 16. As described above, a problem exists in operation of prior art systems 10 in that walls 28 of reservoir tank module 16 are typically formed of a plastic polymer having relatively low thermal conductivity such that at extreme low temperature conditions insufficient heat is passed into storage tank 18 to maintain an adequate rate of liquefaction and replenishment.

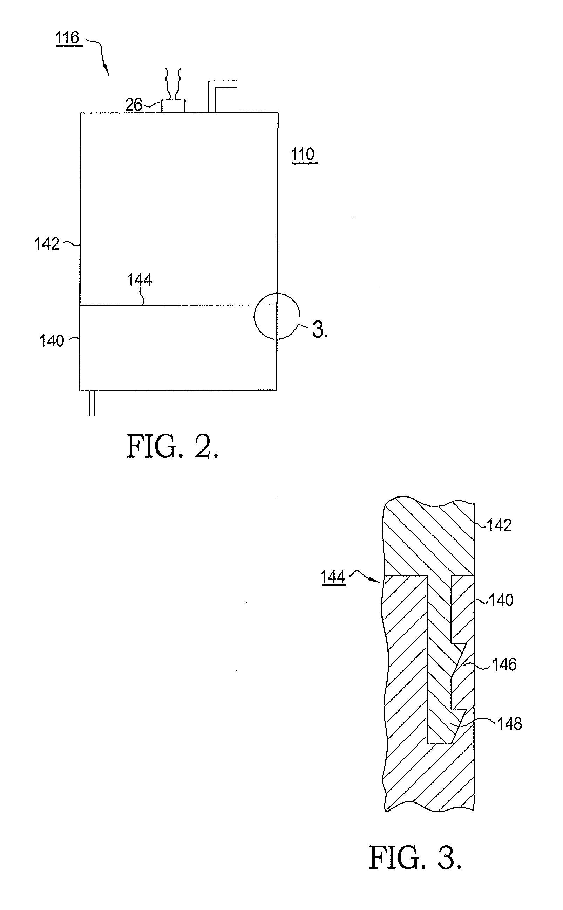

Referring to FIGS. 2 and 3, a first embodiment 116 of an improved hybrid reservoir tank module, for substitution for prior art reservoir tank module 16 in system 10 to form an improved system 110, comprises a pot shaped lower portion 140 formed of a urea-resistant metal such as stainless steel and an upper portion 142, which may be cylindrical, formed of a plastic polymer and joined to lower portion 140 at juncture 144. The joining may be effected by any desired process for joining metal to plastic, although in a currently preferred embodiment the mating portions 140,142 of embodiment 116 are provided with respective matable barbed portions 146,148 as shown in FIG. 3 which are formed around the peripheries of the respective portions and which are engaged by urging portions 140,142 together. The relative size and thickness of portions 140,142 may be determined conventionally as by computer modeling and/or simple experimentation.

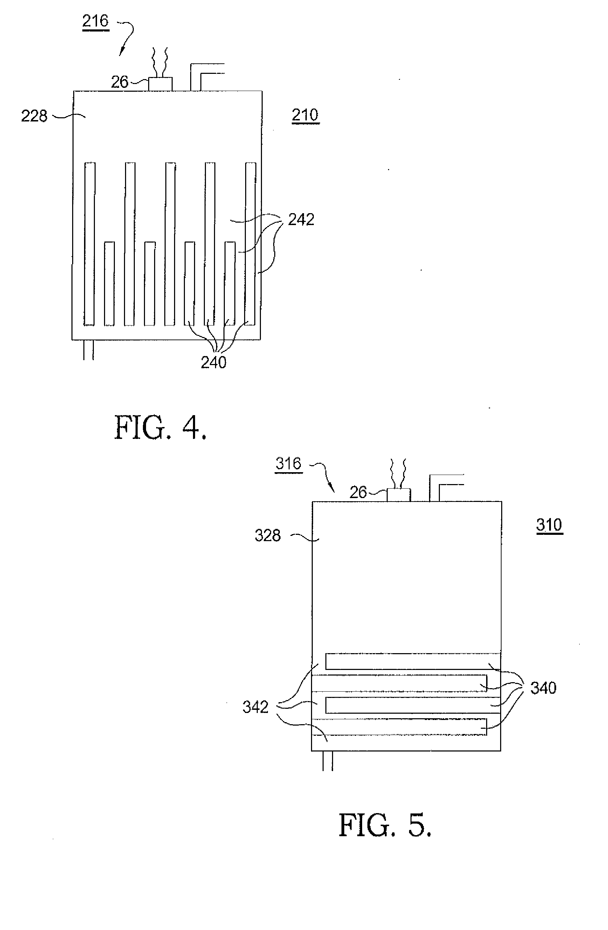

Referring now to FIG. 4, a second embodiment 216 of an improved hybrid reservoir tank module, for substitution for prior art reservoir tank module 16 in system 10 to form an improved system 210, comprises walls 228 formed of a plurality of urea-resistant interconnected metal strips 240 such as stainless steel embedded in an interlocking plastic matrix 242 formed of a plastic polymer as by overmolding in known fashion. Strips 240 may be exposed on the inner and/or outer surfaces thereof or may be covered with plastic 242 on either or both surfaces. The material choice for the strips is made to optimize heat transfer and urea solution compatibility. The relative size and thickness of portions 240,242 may be determined conventionally as by computer modeling and/or simple experimentation.

Referring now to FIG. 5, a third embodiment 316 of an improved hybrid reservoir tank module, for substitution for prior art reservoir tank module 16 in system 10 to form an improved system 310, comprises walls 328 formed of a plurality of urea-resistant interconnected metal rings or bands 340 such as stainless steel embedded in an interlocking plastic matrix 342 formed of a plastic polymer as by overmolding in known fashion. Strips 340 may be exposed on the inner and/or outer surfaces thereof or may be covered with plastic 342 on either or both surfaces. Strips 340 may be continuous around the periphery of module 316 or may be discontinuous as shown in FIG. 5. The relative size and thickness of portions 340,342 may be determined conventionally as by computer modeling and/or simple experimentation.

In each embodiment shown in FIGS. 2,4 and 5, the heater element 26 may be disposed in contact with the metal portion/strips/bands 140,240,340 for improved heat transfer.

## Claims

1. A reservoir tank module (110, 210, 310) for a system for keeping a reservoir solution of urea in a liquid state at normally sub-freezing temperatures, comprising hybrid walls formed of metal (140) and plastic polymer (142).

2. A reservoir tank module (110, 210, 310) in accordance with Claim 1 wherein said metal (140) is formed as a pot-shaped portion and said plastic polymer (142) is formed as a portion joined (144) to said pot-shaped portion.

3. A reservoir tank module (110, 210, 310) in accordance with Claim 2 wherein said joining (144) of said pot-shaped portion to said cylindrical portion includes respective mating barbed (146, 148) portions.

4. A reservoir tank module (110, 210, 310) in accordance with Claim 1 wherein said metal (140) is formed as a plurality of strips (240) and said plastic polymer (142) is formed as a matrix (242) encompassing said plurality of metal strips (240).

5. A reservoir tank module (110, 210, 310) in accordance with Claim 4 wherein at least two of said plurality of strips (240) are interconnected.

6. A reservoir tank module (110, 210, 310) in accordance with Claim 1 wherein said metal (140) is formed as a plurality of bands (340) and said plastic polymer (142) is formed as a matrix (342) encompassing said plurality of metal bands (340)

7. A reservoir tank module (110, 210, 310) in accordance with Claim 6 wherein at least two of said plurality of bands (340) are interconnected.

8. A reservoir tank module (110, 210, 310) in accordance with Claim 1 further comprising a heater (26)

9. A reservoir tank module (110, 210, 310) in accordance with Claim 8 wherein said heater (26) in contact with said hybrid walls formed of metal (140)

10. A system for keeping a reservoir solution of urea in a liquid state at normally sub-freezing temperatures, comprising:
a) a storage tank (18) for said urea solution;
b) a reservoir tank module (110, 210, 310) in hydraulic communication with said storage tank (18) for dispensing said urea solution (20), wherein said reservoir tank module (110, 210, 310) includes hybrid walls formed of metal (140) and plastic polymer (142).

11. A system in accordance with Claim 10 wherein said reservoir tank module (110, 210, 310) is disposed within said storage tank (18).

12. A system in accordance with Claim 10 wherein said hybrid walls comprise metal formed as a pot-shaped portion and plastic polymer formed as a portion joined (144) to said pot-shaped portion.

13. A system in accordance with Claim 10 wherein said hybrid walls comprise metal formed as a plurality of strips and plastic polymer formed as a matrix encompassing said plurality of metal strips (240).

14. A system in accordance with Claim 10 wherein said hybrid walls comprise metal formed as a plurality of bands and plastic polymer formed as a matrix encompassing said plurality of metal bands (340).
